# EUROPÄISCHE PATENTSCHRIFT

(11) **EP 4 150 687 B1**
(45) Veröffentlichungstag und Bekanntmachung des Hinweises auf die Patenterteilung: **26.03.2025**
(21) Anmeldenummer: 21794871.0
(22) Anmeldetag: 22.10.2021
(51) Int. Cl.: H01M 8/0258, H01M 8/0265, H01M 8/0267, H01M 8/0254

(54) **BIPOLARPLATTE UND BRENNSTOFFZELLENSTAPEL**
BIPOLAR PLATE AND FUEL CELL STACK
PLAQUE BIPOLAIRE ET EMPILEMENT DE PILES À COMBUSTIBLE

(30) Priorität: 26.10.2020 DE 102020128107
(43) Veröffentlichungstag der Anmeldung: 22.03.2023
(73) Patentinhaber: AUDI AG, 85057 Ingolstadt (DE)
(72) Erfinder: KEITSCH, Oliver, 74076 Heilbronn (DE); STRÖBEL, Raimund Theo, 74080 Heilbronn (DE)
(74) Vertreter: Hentrich Patent- & Rechtsanwaltspartnerschaft mbB
(86) Internationale Anmeldenummer: PCT/EP2021/079335
(87) Internationale Veröffentlichungsnummer: WO 2022/090078

(56) Entgegenhaltungen:
- DE-A1- 102008 056 900
- DE-A1- 102014 206 335
- DE-A1- 102015 200 573
- DE-A1- 102015 214 517

## Beschreibung

Die Erfindung betrifft eine Bipolarplatte, die aus zwei miteinander verbundenen Einzelplatten gebildet ist. Jede der Einzelplatten weist ein Reaktantenflussfeld für einen Reaktanten der Brennstoffzellenreaktion auf, wobei jeweils eines der Flussfelder auf den Plattenoberflächen vorhanden ist, die im verbundenen Zustand voneinander wegweisen. Jedes Reaktantenflussfeld umfasst mehrere durch Wandungen von Stegen begrenzte Strömungskanäle für ein Reaktionsmedium. In einem aktiven Bereich liegen die Stege und die Strömungskanäle der Einen der Einzelplatten gegenüber von den Stegen und den Strömungskanälen der Anderen der Einzelplatten, womit sie mit anderen Worten im aktiven Bereich also zueinander fluchtend verlaufen. Auf diese Weise bilden die einander zuweisenden Plattenoberflächen der Einzelplatten ein sich zwischen den Einzelplatten erstreckendes Kühlmittelflussfeld aus. Die Erfindung betrifft außerdem einen Brennstoffzellenstapel mit einer Mehrzahl an Brennstoffzellen, denen derartige Bipolarplatten zugeordnet sind.

Brennstoffzellenvorrichtungen werden für die chemische Umsetzung eines Brennstoffs mit Sauerstoff zu Wasser genutzt, um elektrische Energie zu erzeugen. Hierfür enthalten Brennstoffzellen als Kernkomponente die sogenannte Membran-Elektroden-Einheit (MEA für membrane electrode assembly), die ein Verbund aus einer protonenleitenden Membran und jeweils einer, beidseitig an der Membran angeordneten Elektrode (Anode und Kathode) ist. Zudem können Gasdiffusionslagen (GDL) beidseitig der Membran-Elektroden-Einheit an den der Membran abgewandten Seiten der Elektroden angeordnet sein. Im Betrieb der Brennstoffzellenvorrichtung mit einer Mehrzahl zu einem Brennstoffzellenstapel zusammengefasster Brennstoffzellen wird der Brennstoff, insbesondere Wasserstoff H₂ oder ein wasserstoffhaltiges Gasgemisch der Anode zugeführt, wo eine elektrochemische Oxidation von H₂ zu H⁺ unter Abgabe von Elektronen stattfindet. Über den Elektrolyten oder die Membran, welche die Reaktionsräume gasdicht voneinander trennt und elektrisch isoliert, erfolgt ein Transport der Protonen H⁺ aus dem Anodenraum in den Kathodenraum. Die an der Anode bereitgestellten Elektronen werden über eine elektrische Leitung der Kathode zugeleitet. Der Kathode wird Sauerstoff oder ein sauerstoffhaltiges Gasgemisch zugeführt, so dass eine Reduktion von O₂ zu O²⁻ unter Aufnahme der Elektronen stattfindet. Gleichzeitig reagieren im Kathodenraum diese Sauerstoffanionen mit den über die Membran transportierten Protonen unter Bildung von Wasser.

Den Elektroden der Brennstoffzellen werden mittels Bipolarplatten die Reaktantengase zugeführt. Zusätzlich zu den Reaktantengasen wird aufgrund der bei der Brennstoffzellenreaktion erzeugten Wärme auch ein Kühlmedium durch die Bipolarplatten durchgeführt, so dass auf kleinstem Raum drei verschiedene Medien durch die Bipolarplatten geführt werden.

Bei der Versorgung der Brennstoffzellen mit den Reaktanten werden diese über Hauptkanäle (Ports) in die Bipolarplatten geleitet, die eine Verteilung der Reaktanten in einen aktiven Bereich bewirken soll, um mittels eines Flussfeldes die gesamte Fläche der Elektroden möglichst gleichmäßig zu versorgen. Da in dem Brennstoffzellenstapel mehrere Bipolarplatten mit den Membran-Elektroden-Einheiten gestapelt sind, werden Dichtungen eingesetzt, die die Hauptkanäle längs durch den Brennstoffzellenstapel abdichten. Zusätzlich muss eine gute Abdichtung gegenüber dem in Kühlmittelkanälen strömenden Kühlmedium erfolgen.

Bipolarplatten mit Verteilerbereichen, die in einem Verteilerbereich eine Vergleichmäßigung der Reaktantenströmungen bewirken sollen, sind den Druckschriften US 2017 / 0 214 063 A1, DE 10 2015 225 228 A1 und DE 10 2014 206 333 A1 zu entnehmen.

Gerade der Führung des Kühlmediums über oder in den Bipolarplatten wurde bisher in der Entwicklungsphase eine geringere Bedeutung beigemessen als den Führungen für die Reaktantenströme. Dies hat zur Folge, dass konventionelle Bipolarplatten noch keine optimale Gleichverteilung für das Kühlmedium bereitstellen, sodass es vorkommen kann, dass aufgrund eines lokal vorhandenen nur niedrigen Volumenstroms eine lokale Überhitzung (ein sogenannter "Hotspot") entstehen kann.

In der DE 10 2015 214 517 A1 wird eine Bipolarplatte beschrieben, die in ihrem Verteilbereich eine sich überkreuzende Führung der beiden Reaktionsmedien beschreibt.

In der DE 10 2015 200 573 A1 wird eine Bipolarplatte beschrieben, die im Verteilbereich Abflachungen der Stege für die Reaktantenführung aufweist, damit das Kühlmittel verteilt werden kann.

In der DE 10 2014 206 335 A1 wird eine Bipolarplatte beschrieben, deren Verteilbereich mit sich überkreuzenden Medienströmungen realisiert ist. Die Anodenkanäle sind versetzt zu den Kathodenkanälen angeordnet.

In der DE 10 2008 056 900 A1 wird ebenfalls eine Bipolarplatte beschrieben, die mit sich kreuzenden Strömungskanälen im Verteilbereich gebildet ist. Dabei wird beschrieben, dass in dem Verteilerbereich sich die Einströmkanäle der beiden Platten der Bipolarplatte überkreuzen und dadurch das Kühlmittel durch Zwischenräume zwischen den sich überkreuzenden Einströmkanälen geführt wird.

Es ist daher die Aufgabe der vorliegenden Erfindung, eine Bipolarplatte und einen Brennstoffzellenstapel bereitzustellen, die derartige lokale Überhitzungen vermeiden.

Diese Aufgabe wird mit einer Bipolarplatte mit den Merkmalen des Anspruchs 1 und durch einen Brennstoffzellenstapel mit den Merkmalen des Anspruchs 7 gelöst. Vorteilhafte Ausgestaltungen mit zweckmäßigen Weiterbildungen der Erfindung sind in den abhängigen Ansprüchen angegeben.

Die erfindungsgemäße Bipolarplatte zeichnet sich insbesondere dadurch aus, dass außerhalb und/oder in einem Randbereich des aktiven Bereichs ein lateraler Versatz zwischen den Stegen der Einzelplatten vorliegt, derart, dass dort benachbart verlaufende Kühlmittelkanäle des Kühlmittelflussfelds mittels Durchtrittsöffnungen zur Verteilung eines Kühlmittelstroms strömungsmechanisch miteinander verbunden sind.

Auf diese Weise liegt also kurz vor dem aktiven Bereich oder auch ganz am Rand des aktiven Bereichs eine Vergleichmäßigung oder Homogenisierung des Kühlmittels vor, sodass lokale Überhitzungen oder Hotspots wirksam vermieden werden. Derjenige Bereich, in welchem sich aufgrund des lateralen Versatzes der Stege die Kühlmittelkanäle kreuzen, kann beispielsweise auch ein Verteilerbereich sein, der sich unmittelbar an die Medienports anschließt, wobei auch zwischen dem aktiven Bereich und einem Verteilerbereich der Kreuzungsbereich mit den Durchströmungsöffnungen für das Kühlmittel vorliegen kann.

Es hat sich als vorteilhaft erwiesen, wenn die Stege der Einen der Einzelplatten außerhalb und/oder in einem Randbereich des aktiven Bereichs gegenüber den Stegen im aktiven Bereich um einen ersten Winkel abgewinkelt verlaufen. Der erste Winkel wird dabei in Abhängigkeit des spezifischen Designs der Bipolarplatte gewählt. Auch die Länge der dort vorhandenen Kreuzungen oder Durchtrittsöffnungen hängen insbesondere vom gewünschten Design der Bipolarplatte ab.

Zusätzlich ist die Möglichkeit gegeben, dass auch die Stege der Anderen der Einzelplatten außerhalb und/oder in einem Randbereich des aktiven Bereichs gegenüber den Stegen im aktiven Bereich um einen zweiten Winkel abgewinkelt verlaufen. Auch hierdurch lässt sich eine Durchtrittsöffnung schaffen, die zu einer Gleichverteilung des Kühlmittelstroms über die Bipolarplatte führt.

Der erste Winkel weicht vom zweiten Winkel ab und beide Winkel sind von null verschieden. Dabei handelt es sich beim ersten Winkel um einen positiven Winkel und beim zweiten Winkel um einen negativen Winkel, wobei die beiden Winkel aber betragsmäßig auch gleich groß sind. In diesem Zuge ist es also vorgesehen, dass alle Stege um denselben Betrag abgewinkelt sind, damit eine gewünschte Gleichverteilung des Kühlmediums herbeigeführt werden kann.

Die Länge der abgewinkelt verlaufenden Stege sowie der dazwischen verlaufenden Strömungskanäle beträgt vorzugsweise zwischen 5 und 50 mm. Auf diese Weise wird auf einem sehr eng begrenzten Bereich eine Gleichverteilung des Kühlmittelstroms hervorgerufen, sodass die Bipolarplatte als solche sehr kompakt gestaltet werden kann. Erst im Anschluss daran gehen die Stege und die Strömungskanäle in die gegenüberliegende Konfiguration im aktiven Bereich über.

Um eine lediglich leichte Anstellung der Stege und der dazwischen verlaufenden Strömungskanäle zu realisieren, hat es sich als vorteilhaft erwiesen, wenn der Winkel der Stege der ersten und/oder der zweiten Einzelplatte von 10 Grad bis 45 Grad beträgt. Eine solche Winkellage reicht bereits aus, um Hotspots über die Erstreckung der Bipolarplatte zu vermeiden.

Um eine noch gleichmäßigere, insbesondere turbulente, Strömung des Kühlmittels hervorzurufen, hat es sich als vorteilhaft erwiesen, wenn der Winkel der zwischen 45 Grad und 80 Grad beträgt, um welchen die Stege der ersten und/oder der zweiten Einzelplatte angewinkelt sind bzw. angestellt wurden.

Ein kompaktes Design einer Bipolarplatte lässt sich ferner dadurch realisieren, dass die von den abgewinkelten Stegen begrenzten Strömungskanäle strömungsmechanisch jeweils mit einem Hauptkanal verbunden sind, der in einer Ecke der Einzelplatten angeordnet ist. Die abgewinkelten Stege sind vorzugsweise möglichst nah am aktiven Bereich positioniert, da im aktiven Bereich aufgrund der gegenüberliegenden Konfiguration vorzugsweise dieselbe Anzahl an Kathoden- und Anodenkanälen vorhanden ist.

Zudem hat es sich als vorteilhaft erwiesen, wenn die Kühlmittelkanäle strömungsmechanisch mit einem Hauptkühlmittelkanal verbunden sind, der am Plattenrand zwischen zwei Hauptkanälen der Reaktanten angeordnet ist.

Die in Verbindung mit der erfindungsgemäßen Bipolarplatte erläuterten Vorteile, vorteilhafte Ausgestaltungen und Wirkungen, gelten in gleichem Maße für den erfindungsgemäßen Brennstoffzellenstapel, der mit einer Mehrzahl an Brennstoffzellen mit den erfindungsgemäßen Bipolarplatten ausgerüstet ist. Auch dieser zeichnet sich durch ein verbessertes Wärmemanagement aufgrund der Vermeidung von lokalen Überhitzungsstellen aus.

Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen. Es sind somit auch Ausführungen als von der Erfindung umfasst und offenbart anzusehen, die in den Figuren nicht explizit gezeigt oder erläutert sind, jedoch durch separierte Merkmalskombinationen aus den erläuterten Ausführungen hervorgehen und erzeugbar sind.

Weitere Vorteile, Merkmale und Einzelheiten der Erfindung ergeben sich aus den Ansprüchen, der nachfolgenden Beschreibung bevorzugter Ausführungsformen sowie anhand der Zeichnungen. Dabei zeigen:
- Fig. 1: eine schematische Darstellung eines eine Mehrzahl von Brennstoffzellen aufweisenden Brennstoffzellenstapels mit den die Hauptkanälen zeigenden Bipolarplatten,
- Fig. 2: eine schematische Detaildarstellung des Schnitts II-II der Bipolarplatte aus Figur 1,
- Fig. 3: eine schematische Detaildarstellung des Schnitts III-III der Bipolarplatte aus Figur 1,
- Fig. 4: eine schematische Detail-Draufsicht auf die Stege und Strömungskanäle der Reaktantenflussfelder, wobei die Kanäle des ersten Reaktanten durchgezogen und die Kanäle des zweiten Reaktanten gestrichelt dargestellt sind, und
- Fig. 5: eine der Figur 4 entsprechende Darstellung mit der durch die Anstellung der Stege/Strömungskanäle erfolgenden Kühlmittelkreuzung/Kühlmittelverteilung.

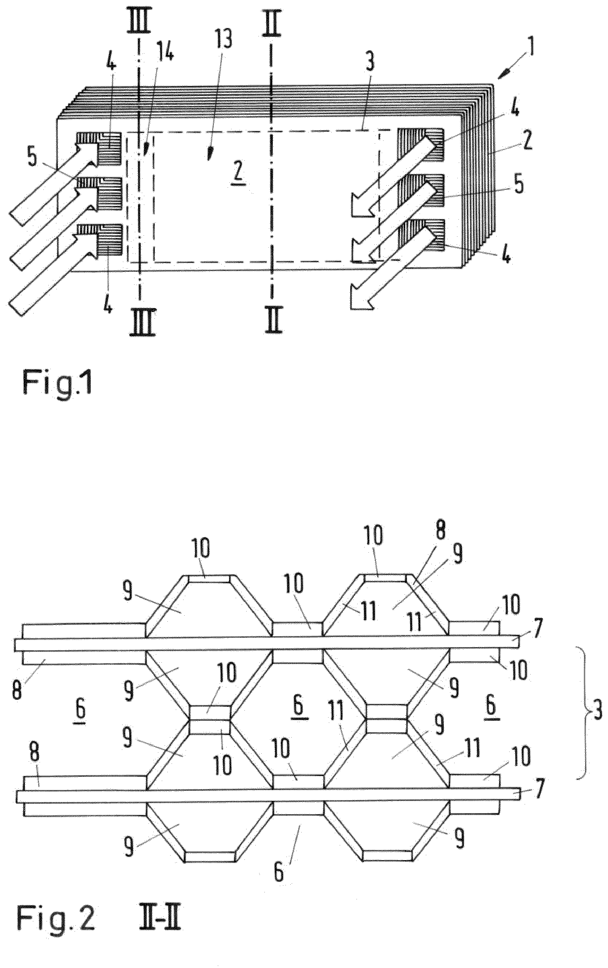

Ein in Figur 1 gezeigter Brennstoffzellenstapel 1 besteht aus einer Mehrzahl von in Reihe geschalteter Brennstoffzellen 2. Jede der Brennstoffzellen 2 umfasst eine Anode und eine Kathode sowie eine die Anode von der Kathode trennende protonenleitfähige Membran. Die beiden Elektroden zusammen mit der Membran bilden eine Membran-Elektroden-Anordnung 7 (kurz: MEA). Die Membran ist aus einem Ionomer, vorzugsweise einem sulfonierten Tetrafluorethylen-Polymer (PTFE) oder einem Polymer der perfluorierten Sulfonsäure (PFSA) gebildet. Alternativ kann die Membran als eine sulfonierte Hydrocarbon-Membran gebildet sein.

Über Anodenräume innerhalb des Brennstoffzellenstapels 1 wird den Anoden Brennstoff (zum Beispiel Wasserstoff) zugeführt. In einer Polymerelektrolytmembranbrennstoffzelle (PEM-Brennstoffzelle) werden an der Anode Brennstoff oder Brennstoffmoleküle in Protonen und Elektronen aufgespaltet. Die Membran lässt die Protonen (zum Beispiel H⁺) hindurch, ist aber undurchlässig für die Elektronen (e⁻). An der Anode erfolgt dabei die folgende Reaktion: 2H₂ → 4H⁺ + 4e⁻ (Oxidation/Elektronenabgabe). Während die Protonen durch die Membran zur Kathode hindurchtreten, werden die Elektronen über einen externen Stromkreis an die Kathode oder an einen Energiespeicher geleitet. Über Kathodenräume innerhalb des Brennstoffzellenstapels 1 kann den Kathoden Kathodengas (zum Beispiel Sauerstoff oder Sauerstoff enthaltende Luft) zugeführt werden, so dass kathodenseitig die folgende Reaktion stattfindet: O₂ + 4H⁺ + 4e⁻ → 2H₂O (Reduktion/Elektronenaufnahme).

Dem Brennstoffzellenstapel 1 wird über eine Kathodenfrischgasleitung durch einen Verdichter komprimierte Luft zugeführt wird. Zusätzlich ist der Brennstoffzellenstapel 1 mit einer Kathodenabgasleitung verbunden. Anodenseitig wird dem Brennstoffzellenstapel 1 in einem Wasserstofftank bereitgehaltener Wasserstoff über eine Anodenfrischgasleitung zugeführt zur Bereitstellung der für die elektrochemische Reaktion in einer Brennstoffzelle 2 erforderlichen Reaktanten. Diese Gase werden an Bipolarplatten 3 übergeben, die für die Verteilung der Gase an die Membran und der Ausleitung Hauptkanäle 4 (Ports) aufweisen. Zusätzlich weisen die Bipolarplatten Hauptkühlmittelkanäle 5 (Ports) für die Durchleitung eines Kühlmediums in einem Kühlmittelkanal 6 auf, so dass auf kleinstem Raum drei verschiedene Medien geführt werden.

In Figur 1 sind außerdem die jeweils zu Paaren zusammengefassten Hauptkanäle 4, 5 einer Mehrzahl den Brennstoffzellenstapel 1 bildenden Brennstoffzellen 2 mit Bipolarplatten 3 gezeigt.

Ein Detailausschnitt des Brennstoffzellenstapels 1 entlang des Schnittes II-II aus Figur 1 ist in Figur 2 gezeigt. Dieser Schnitt verläuft durch den aktiven Bereich 13 des Brennstoffzellenstapels 1. Der aktive Bereich 13 der Bipolarplatte 3 ist dabei selbstverständlich selbst nicht elektrochemisch aktiv, aber er ist zu denjenigen Konstituenten der Brennstoffzelle 2 benachbart angeordnet, bei welchen die elektrochemische Brennstoffzellenreaktion erfolgt. Es ist zu erkennen, dass die Bipolarplatte 3 in diesem aktiven Bereich 13 auf ihren voneinander wegweisenden Oberflächen die Reaktantenflussfelder aufweist, die sich gegenüberliegend angeordnet sind und damit eine gegenüberliegende Konfiguration ausbilden. Die Reaktantenflussfelder weisen jeweils eine Mehrzahl von durch Wandungen 11 von Stegen 10 begrenzten Strömungskanälen 9 für das jeweilige Reaktionsmedium auf. Die Stege 10 und die Strömungskanäle 9 der Einen der Einzelplatten 8 sind in diesem aktiven Bereich 13 also gegenüberliegend zu den Stegen 10 und den Strömungskanälen 9 der Anderen der Einzelplatten 8 verlaufend gestaltet. Auf diese Weise werden Kühlmittelkanäle 6 eines sich zwischen den Einzelplatten 8 erstreckenden Kühlmittelflussfelds gebildet.

Wenn das Kühlmittel in den Kühlmittelkanälen 6 nicht mit gleichem Druck oder mit gleichem Volumenstrom vorliegt, können Stellen einer lokalen Überhitzung (sogenannte "Hotspots") auftreten. Deshalb ist es erforderlich, den Kühlmittelstrom gleichmäßiger zu verteilen, um solche Stellen lokaler Überhitzung zu vermeiden.

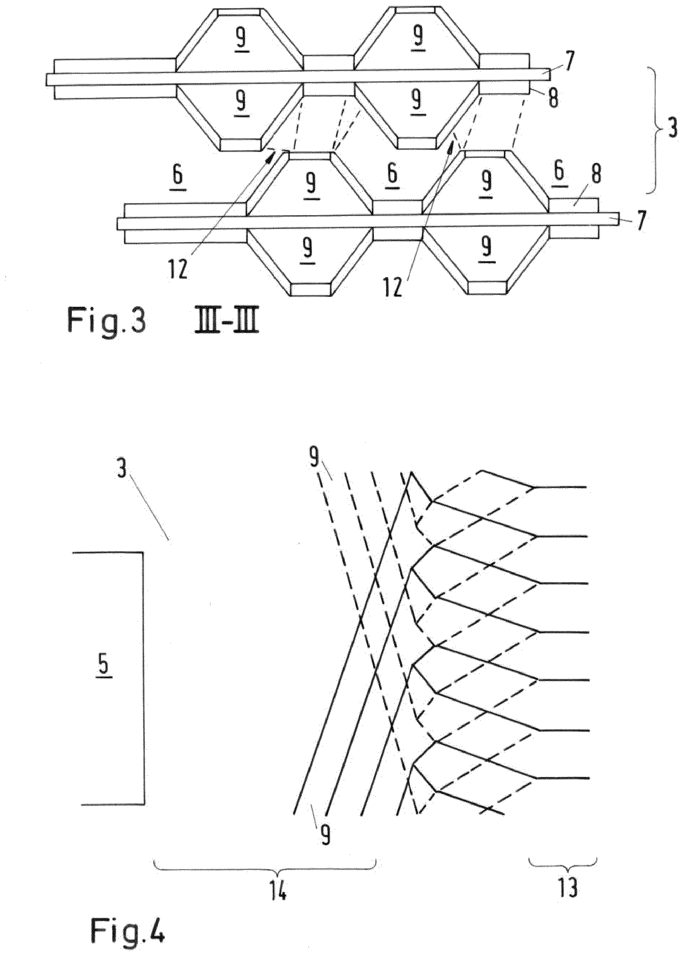

Hier setzt die erfindungsgemäße Bipolarplatte 3 an, die in Figur 3 in einer Detailansicht entlang des Schnittes III-III aus Figur 1 näher zu erkennen ist. Die Bipolarplatte 3 sieht außerhalb und/oder in einem Randbereich des aktiven Bereichs 13 einen lateralen Versatz zwischen den Stegen 10 der Einzelplatten 8 vor. Dieser Versatz ist derart gewählt, dass dort benachbart verlaufende Kühlmittelkanäle 6 des Kühlmittelflussfelds über Durchtrittsöffnungen 12 zur Verteilung eines Kühlmittelstroms strömungsmechanisch miteinander verbunden sind. Auf diese Weise kann also das Kühlmittel kurz vor oder unmittelbar am Rand des aktiven Bereichs 13 noch einmal durch eine geeignete Aufspaltung gleichverteilt werden, sodass über das Kühlmittelflussfeld im aktiven Bereich 13 hinweg ein homogener Kühlmittelstrom vorliegt. In Figur 3 ist lediglich der Versatz einer der beiden Einzelplatten 8 zu erkennen, wobei auch die andere der beiden Einzelplatten 8 versetzt sein kann.

Ausweislich der Figur 4 sind die Stege 10 der Einen der Einzelplatten 8 außerhalb und/oder in einem Randbereich des aktiven Bereichs 13 gegenüber den Stegen 10 im aktiven Bereich 13 um einen ersten Winkel abgewinkelt ausgerichtet. Außerdem ist zu erkennen, dass auch die Stege 10 der Anderen der Einzelplatten 8 außerhalb und/oder in einem Randbereich des aktiven Bereichs 13 gegenüber den Stegen 10 im aktiven Bereich 13 um einen zweiten Winkel abgewinkelt verlaufen. In Figur 4 ist erfindungsgemäß derselbe Winkel für die Anstellung der Stege 10 gewählt, wobei dieser bei der Einen der Einzelplatten 8 positiv gewählt wurde, und wobei dieser bei der Anderen der Einzelplatten 8 negativ gewählt wurde. Auf diese Weise entstehen also in dem zwischen den beiden Einzelplatten 8 liegenden Kühlmittelflussfeld die aus Figur 3 ersichtlichen Durchtrittsöffnungen 12, die zu einem Ausgleich des Kühlmittels über die Bipolarplatte 3 hinweg führen.

In Abhängigkeit des Bipolarplattendesigns ist es bevorzugt, wenn die abgewinkelt verlaufenden Stege 10 sowie die dazwischen verlaufenden Strömungskanäle 9 zwischen 5 mm und 50 mm lang sind, bevor sie in eine gegenüberliegende Konfiguration im aktiven Bereich 13 übergehen. Vorzugsweise sind alle Stege 10 um denselben Betrag abgewinkelt. In Abhängigkeit des Designs beträgt der Winkel von 10 Grad bis 45 Grad, wobei in einer anderen alternativen Gestaltung der Bipolarplatte 3 der Winkel zwischen 45 Grad und 80 Grad beträgt.

Selbstverständlich sind die von den abgewinkelten Stegen 10 begrenzten Strömungskanäle 9 strömungsmechanisch jeweils mit einem der Hauptkanäle 4 verbunden, welche vorliegend in einer Ecke der beiden rechteckig gestalteten Einzelplatten 8 angeordnet ist. Die Kühlmittelkanäle 6, die in ihrem Kreuzungsbereich 15 aufgrund der Durchströmungsöffnungen 12 eine Verschränkung aufweisen, sind ihrerseits strömungsmechanisch mit dem Hauptkühlmittelkanal 5 verbunden, der sich am Plattenrand zwischen 2 zwei der Hauptkanäle 4 befindet.

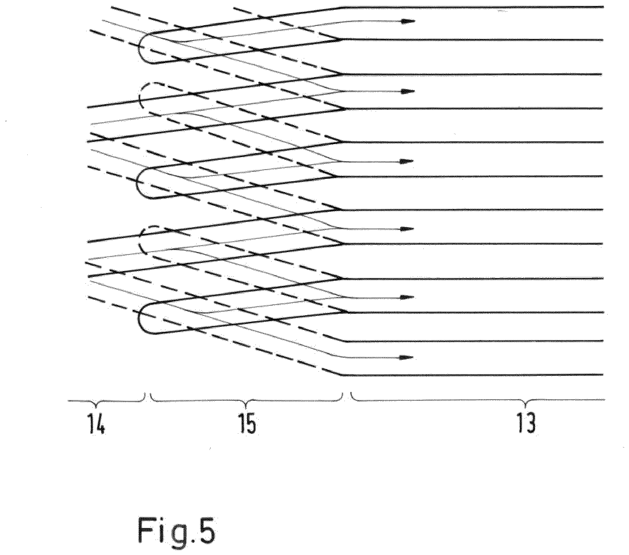

In Figur 5 ist abschließend nochmals dargestellt, wie das Kühlmittel aufgrund der Durchtrittsöffnungen 12 aufgeteilt wird, was zu einer gleichmäßigeren Kühlmittelverteilung über die Bipolarplatte 3 führt. Dabei kann die Mehrzahl an Durchtrittsöffnungen 12 im Randbereich 15 des aktiven Bereichs 13 vorliegen, wobei aber der Kreuzungsbereich 15 auch außerhalb des aktiven Bereichs 13 liegen kann. Vorzugsweise liegt zwischen dem Kreuzungsbereich 15 und den Medienports 4, 5 noch ein geeigneter Verteilbereich 14 vor, um auch die Reaktanten gleichmäßig auf die Reaktantenflussfelder zu verteilen.

Im Ergebnis ist mit der vorliegenden Erfindung also eine Gleichverteilung der Wärme möglich, da das Kühlmittel gleichmäßig über die Bipolarplatte 3 und damit gleichmäßig über den gesamten Brennstoffzellenstapel 1 verteilt werden kann.

### BEZUGSZEICHENLISTE:

- 1: Brennstoffzellenstapel
- 2: Brennstoffzelle
- 3: Bipolarplatte
- 4: Hauptkanal für Reaktanten
- 5: Hauptkühlmittelkanal für Kühlmedium
- 6: Kühlmittelkanal
- 7: Membran-Elektroden-Anordnung (MEA)
- 8: Einzelplatte
- 9: Strömungskanal
- 10: Steg
- 11: Wandung
- 12: Durchtrittsöffnung
- 13: Aktiver Bereich
- 14: Verteilerbereich
- 15: Randbereich / Kreuzungsbereich (aktiver Bereich)

## Patentansprüche

1. Bipolarplatte (3) gebildet aus zwei miteinander verbundenen Einzelplatten (8), die an ihren voneinander wegweisenden Plattenoberflächen jeweils mit einem Reaktantenflussfeld gebildet sind, welches mehrere durch Wandungen (11) von Stegen (10) begrenzte Strömungskanäle (9) für ein Reaktionsmedium umfasst, wobei die Stege (10) und die Strömungskanäle (9) der Einen der Einzelplatten (8) in einem aktiven Bereich (13) gegenüberliegend zu den Stegen (10) und den Strömungskanälen (9) der Anderen der Einzelplatten (8) verlaufen, um so Kühlmittelkanäle (6) eines sich zwischen den Einzelplatten (8) erstreckenden Kühlmittelflussfelds zu bilden, wobei außerhalb und/oder in einem Randbereich des aktiven Bereichs (13) ein lateraler Versatz zwischen den Stegen (10) der Einzelplatten (8) vorliegt, derart, dass dort benachbart verlaufende Kühlmittelkanäle (6) des Kühlmittelflussfelds mittels Durchtrittsöffnungen (12) zur Verteilung eines Kühlmittelstroms strömungsmechanisch miteinander verbunden sind, wobei die Stege (10) der Einen der Einzelplatten (8) außerhalb und/oder in einem Randbereich des aktiven Bereichs (13) gegenüber den Stegen (10) im aktiven Bereich (13) um einen ersten Winkel abgewinkelt verlaufen, und wobei auch die Stege (10) der Anderen der Einzelplatten (8) außerhalb und/oder in einem Randbereich des aktiven Bereichs (13) gegenüber den Stegen (10) im aktiven Bereich (13) um einen zweiten Winkel abgewinkelt verlaufen, **dadurch gekennzeichnet, dass** es sich beim ersten Winkel um einen positiven Winkel und beim zweiten Winkel um einen negativen Winkel handeln, wobei die beiden Winkel betragsmäßig gleich groß sind.

2. Bipolarplatte (3) nach Anspruch 1, **dadurch gekennzeichnet, dass** die abgewinkelt verlaufenden Stege (10) sowie die dazwischen verlaufenden Strömungskanäle (9) zwischen 5 und 50 Millimeter lang sind, bevor sie in eine gegenüberliegende Konfiguration im aktiven Bereich (13) übergehen.

3. Bipolarplatte (3) nach Anspruch 1 oder 2, **dadurch gekennzeichnet, dass** der Winkel von 10 Grad bis 45 Grad beträgt.

4. Bipolarplatte (3) nach Anspruch 1 oder 2, **dadurch gekennzeichnet, dass** der Winkel zwischen 45 Grad und 80 Grad beträgt.

5. Bipolarplatte (3) nach einem der Ansprüche 1 bis 4, **dadurch gekennzeichnet, dass** die von den abgewinkelten Stegen (10) begrenzten Strömungskanäle (9) strömungsmechanisch jeweils mit einem Hauptkanal (4) verbunden sind, der in einer Ecke der Einzelplatten (8) angeordnet ist.

6. Bipolarplatte (3) nach Anspruch 5, **dadurch gekennzeichnet, dass** die Kühlmittelkanäle (6) strömungsmechanisch mit einem Hauptkühlmittelkanal (5) verbunden sind, der am Plattenrand zwischen zwei Hauptkanälen (4) angeordnet ist.

7. Brennstoffzellenstapel (1) umfassend eine Mehrzahl an Brennstoffzellen (2) mit Bipolarplatten (3) nach einem der Ansprüche 1 bis 6.

## Claims

1. Bipolar plate (3) made of two individual plates (8) which are connected together and each of which is formed with a reactant flow field on the plate surfaces facing away from each other, said reactant flow field comprising multiple flow channels (9) delimited by walls (11) of webs (10) for a reaction medium, wherein the webs (10) and the flow channels (9) of one of the individual plates (8) run in an active region (13) opposite the webs (10) and the flow channels (9) of the other individual plate (8) in order to form coolant channels (6) of a coolant flow field extending between the individual plates (8), wherein outside and/or in an edge region of the active region (13) there is a lateral offset between the webs (10) of the individual plates (8) such that coolant channels (6) of the coolant flow field running adjacently there are fluid-mechanically connected by passage openings (12) for distributing a coolant flow, wherein the webs (10) of one of the individual plates (8) outside and/or in an edge region of the active region (13) run angled by a first angle relative to the webs (10) in the active region (13), and wherein the webs (10) of the other individual plate (8) outside and/or in an edge region of the active region (13) also run angled by a second angle relative to the webs (10) in the active region (13), **characterised in that** the first angle is a positive angle and the second angle is a negative angle, wherein the two angles are equal in magnitude.

2. Bipolar plate (3) according to claim 1, **characterised in that** the angled webs (10) and the flow channels (9) running between them are between 5 and 50 millimetres long before they transition into an opposite configuration in the active region (13).

3. Bipolar plate (3) according to claim 1 or 2, **characterised in that** the angle is from 10 degrees to 45 degrees.

4. Bipolar plate (3) according to claim 1 or 2, **characterised in that** the angle is between 45 degrees and 80 degrees.

5. Bipolar plate (3) according to any one of claims 1 to 4, **characterised in that** the flow channels (9) delimited by the angled webs (10) are each fluid-mechanically connected to a main channel (4) which is arranged in a corner of the individual plates (8).

6. Bipolar plate (3) according to claim 5, **characterised in that** the coolant channels (6) are fluid-mechanically connected to a main coolant channel (5) which is arranged at the plate edge between two main channels (4).

7. Fuel cell stack (1) comprising a plurality of
fuel cells (2) with bipolar plates (3) according to any one of claims 1 to 6.

## Revendications

1. Plaque bipolaire (3) formée de deux plaques individuelles (8) reliées l'une à l'autre, qui sont formées au niveau de leurs surfaces de plaque s'éloignant l'une de l'autre respectivement par un champ d'écoulement de réactif qui comprend plusieurs canaux d'écoulement (9) pour un milieu réactionnel délimités par des parois (11) d'entretoises (10), dans laquelle les entretoises (10) et les canaux d'écoulement (9) de l'une des plaques individuelles (8) s'étendent dans une zone active (13) en face des entretoises (10) et des canaux d'écoulement (9) de l'autre des plaques individuelles (8) pour former ainsi des canaux de réfrigérant (6) d'un champ d'écoulement de réfrigérant s'étendant entre les plaques individuelles (8), dans laquelle un décalage latéral entre les entretoises (10) des plaques individuelles (8) est présent à l'extérieur et/ou dans une zone de bord de la zone active (13), de sorte que des canaux de réfrigérant (6) du champ d'écoulement de réfrigérant s'étendant de manière adjacente à cet endroit sont reliés fluidiquement les uns aux autres au moyen d'ouvertures de passage (12) pour la répartition d'un flux de réfrigérant, dans laquelle les entretoises (10) de l'une des plaques individuelles (8) s'étendent à l'extérieur et/ou dans une zone de bord de la zone active (13) coudées selon un premier angle par rapport aux entretoises (10) dans la zone active (13), et dans laquelle les entretoises (10) de l'autre des plaques individuelles (8) s'étendent également à l'extérieur et/ou dans une zone de bord de la zone active (13) coudées selon un second angle par rapport aux entretoises (10) dans la zone active (13), **caractérisé en ce que** le premier angle est un angle positif et le second angle un angle négatif, dans laquelle les deux angles sont de même grandeur.

2. Plaque bipolaire (3) selon la revendication 1, **caractérisée en ce que** les entretoises coudées (10) ainsi que les canaux d'écoulement (9) s'étendant entre elles ont une longueur comprise entre 5 et 50 millimètres avant de passer à une configuration opposée dans la zone active (13).

3. Plaque bipolaire (3) selon la revendication 1 ou 2, **caractérisée en ce que** l'angle est de 10 degrés à 45 degrés.

4. Plaque bipolaire (3) selon la revendication 1 ou 2, **caractérisée en ce que** l'angle est entre 45 degrés et 80 degrés.

5. Plaque bipolaire (3) selon l'une quelconque des revendications 1 à 4, **caractérisée en ce que** les canaux d'écoulement (9) délimités par les entretoises coudées (10) sont respectivement reliés fluidiquement à un canal principal (4) qui est disposé dans un coin des plaques individuelles (8).

6. Plaque bipolaire (3) selon la revendication 5, **caractérisée en ce que** les canaux de réfrigérant (6) sont reliés fluidiquement à un canal de réfrigérant principal (5) qui est disposé sur le bord de plaque entre deux canaux principaux (4).

7. Empilement de piles à combustible (1) comprenant une pluralité de piles à combustible (2) avec des plaques bipolaires (3) selon l'une quelconque des revendications 1 à 6.
